# EUROPÄISCHE PATENTANMELDUNG

(11) **EP 1 852 629 A1**
(43) Veröffentlichungstag der Anmeldung: **07.11.2007**
(21) Anmeldenummer: 07008930.5
(22) Anmeldetag: 07.05.2007
(51) Int. Cl.: F16F 1/54

(54) **Lager**

(30) Priorität: 06.05.2006 DE 102006021142
(71) Anmelder: Carl Freudenberg KG, 69469 Weinheim (DE)
(72) Erfinder: Kardoes, Hilrich, 21423 Winsen/Luhe (DE)

(57) **Zusammenfassung**

Lager (1), umfassend ein Auflager (2) und ein Traglager (3), wobei das Auflager (2) eine Durchbrechung (4) aufweist in der das Traglager (3) angeordnet ist, wobei das Auflager (2) und das Traglager (3) einander zugewandte Wände (5, 6, 7, 8) aufweisen und wobei das Auflager (2) und das Traglager (3) durch Federkörper (9, 10) miteinander verbunden sind, die an zumindest einem Teil der Wände (5, 6, 7, 8) angeordnet sind, wobei die Wände (5, 6) des Auflagers (2) und die Wände (7, 8) des Traglagers (3) relativ zueinander geneigt sind.

## Beschreibung

### Technisches Gebiet

Die Erfindung betrifft ein Lager, umfassend ein Auflager und ein Traglager, wobei das Auflager eine Durchbrechung aufweist in der das Traglager angeordnet ist, wobei das Auflager und das Traglager einander zugewandte Wände aufweisen und wobei das Auflager und das Traglager durch Federkörper miteinander verbunden sind, die an zumindest einem Teil der Wände angeordnet sind.

### Stand der Technik

Derartige Lager sind allgemein bekannt und werden häufig zur Lagerung von Motoren von Nutzfahrzeugen eingesetzt. Zur Verbesserung der Federungseigenschaften soll das Lager eine hohe Steifigkeit in Querrichtung aufweisen. In dieser Richtung werden die Federkörper jedoch senkrecht zu deren Anbindungsflächen und damit auf Scherung beansprucht. Hohe Scherspannungen führen zur Zerstörung der Federkörper. Daher sind konstruktive Maßnahmen notwendig, um die Scherspannungen zu reduzieren. Es ist bekannt, die Wände von Auflager und Traglager so auszugestalten, dass sich V-förmige Federkörper ergeben. Durch diese Pfeilung ergibt sich eine hohe Steifigkeit in Querrichtung. Dabei ist jedoch nachteilig, dass derartige Lager aufwendig in der Montage sind und teure Montageteiler erfordern.

### Darstellung der Erfindung

Der Erfindung liegt die Aufgabe zugrunde, ein Lager bereitzustellen, welches bei einer hohen Quersteifigkeit in zumindest einer Richtung einfach herstellbar ist.

Diese Aufgabe wird mit den Merkmalen von Anspruch 1 gelöst. Auf vorteilhafte Ausgestaltungen nehmen die Unteransprüche Bezug.

Zur Lösung der Aufgabe sind die Wände des Auflagers und des Traglagers relativ zueinander geneigt. Durch die Neigung ergeben sich Federkörper, die in zumindest einer Querrichtung eine hohe Steifigkeit aufweisen. Die Querrichtung ist dabei die Richtung, die sich parallel zu den Wänden des Auflagers erstreckt. Das Lager weist seine größte Steifigkeit in der Längsrichtung auf. Die Längsrichtung erstreckt sich senkrecht zu der Querrichtung. Das Verhältnis der Steifigkeit aus Hochrichtung und Längsrichtung zu der Steifigkeit in Querrichtung beträgt bei dem erfindungsgemäßen Lager höchstens 3,5:1. Da das Lager die höhere Hochsteifigkeit besonders in einer Richtung aufweist, ist an dem Traglager vorzugsweise ein Anschlagkörper vorgesehen, der den Federweg in der Ausfederrichtung begrenzt. Das erfindungsgemäße Lager ist besonders zur Lagerung von Motoren von Nutzfahrzeugen geeignet. Dazu wird das Auflager mit dem Fahrzeugrahmen des Nutzfahrzeugs verbunden und das Traglager wird mit dem zu lagernden Motor verbunden.

Die Wände des Traglagers können geneigt sein. Bei dem Traglager sind die außenumfangsseitigen Wände geneigt, die den Wänden des Auflagers zugeneigt sind. Das Traglager ist auch bei geneigten Außenwänden einfach herstellbar und kann einfach montiert werden.

Die Durchbrechung kann im Wesentlichen dreiecksförmig sein. Das in die Durchbrechung eingeführte Traglager weist ebenfalls eine dreieckige Geometrie auf. Derartige Lager weisen eine besonders hohe Steifigkeit in Längsrichtung auf, wobei die Federkörper an den geneigten Schenkeln angeordnet sind und dadurch vorwiegend auf Druck beansprucht werden.

An zwei Paaren einander gegenüber liegender Wände können Federkörper angeordnet sein. Die Federkörper sind an den geneigten Schenkeln angeordnet, die vorwiegend auf Druck beansprucht werden. Der einzige waagerechte Schenkel weist kein Federelement auf, da dieses vorwiegend auf Zug beansprucht würde.

Einer weiteren Wand des Auflagers kann ein Anschlagelement zugeordnet sein, welches mit dem Traglager verbunden ist. Das Anschlagelement ist vorzugsweise an der waagerecht ausgerichteten Wand des Traglagers vorgesehen und besteht aus einer Erhebung, die materialeinheitlich und einstückig mit dem Traglager ausgebildet sein kann. Das Anschlagelement weist vorzugsweise einen Überzug aus einem elastomeren Material auf. Das Anschlagelement begrenzt den Federweg und verhindert eine Zerstörung des Lagers.

Das Auflager kann auf einer ersten Stirnseite zumindest teilweise einen in Richtung der Durchbrechung ragenden Bund aufweisen. Der Bund sichert den Federkörper und bildet einen Anschlag für den Federkörper bei hohen Beanspruchungen in Querrichtung.

Die Federkörper können auf der zweiten Stirnseite durch ein an das Lager angrenzendes Bauteil gestützt sein. Das Auflager ist nach betriebsfertiger Montage beispielsweise mit dem Fahrzeugrahmen eines Nutzfahrzeugs verbunden. Der Fahrzeugrahmen stützt dann die Federelemente verliersicher. Dadurch können zusätzliche Sicherungselemente entfallen, wodurch sich die Herstellung des Lagers vereinfacht. Diese Ausgestaltung bietet sich gemeinsam mit dem vorbeschriebenen Bund insbesondere auch für pfeilförmig ausgebildete Federkörper an. Bei derartigen Federkörpern ist die Steifigkeit in beiden Längsrichtungen gleich und die einfache Ausgestaltung des Traglagers mit Bund und Abstützung am Fahrzeugrahmen ermöglicht eine kostengünstige Herstellung des Lagers.

Das Auflager und das Traglager können jeweils einen Befestigungsflansch aufweisen, die senkrecht zueinander angeordnet sind. Dadurch erleichtert sich die Montage des zu lagernden Motors, da der Befestigungsflansch des Traglagers, auf dem der Motor gelagert wird, waagerecht ausgerichtet ist.

Das Auflager und das Traglager können jeweils einstückig ausgebildet sein. Dadurch sind Traglager und Auflager kostengünstig herstellbar. Beide Bauteile können beispielsweise als metallisches Spritzgussteil ausgebildet sein.

Das Traglager kann umfänglich mit dem Werkstoff der Federkörper umgeben sein. Der Federkörper besteht aus einem elastomeren Material, beispielsweise Naturkautschuk. Die Elastomerschicht, die das Traglager umgibt, bietet einen Schutz vor Beschädigungen.

Das Anschlagelement und die Federkörper können materialeinheitlich und einstückig ausgebildet sein. Dazu werden die Federkörper und der elastomere Abschnitt des Anschlagelementes in einem Herstellungsschritt hergestellt. Dadurch vereinfacht sich die Herstellung und die Herstellungskosten verringern sich.

### Kurzbeschreibung der Zeichnung

Einige Ausführungsbeispiele des erfindungsgemäßen Lagers werden nachfolgend anhand der Figuren näher erläutert. Diese zeigen, jeweils schematisch:
- Fig. 1: das erfindungsgemäße Lager im Querschnitt;
- Fig. 2: das Lager in perspektivischer teilgeschnittener Ansicht;
- Fig. 3: das Traglager des Lagers mit angeformten Federkörpern im Detail;
- Fig. 4: das an einem Fahrwerk montierte Lager.

### Ausführung der Erfindung

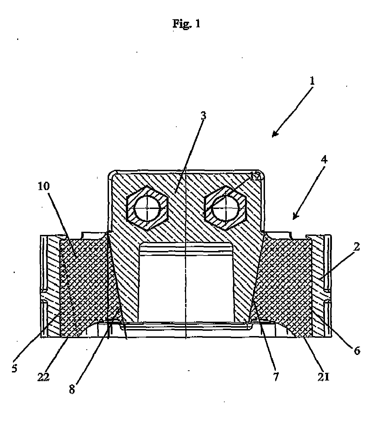

Figur 1 zeigt ein Lager 1 zur Lagerung eines Motors eines Nutzfahrzeugs. Das Lager 1 umfasst ein Auflager 2, welches eine Durchbrechung 4 aufweist. In der Durchbrechung 4 ist ein Traglager 3 angeordnet. Das Auflager 2 und das Traglager 3 weisen einander zugewandte Wände 5, 6, 7, 8 an denen Federkörper 9, 10 aus elastomerem Werkstoff, in dieser Ausführung Naturkautschuk, angeordnet sind und das Auflager 2 und das Traglager 3 miteinander verbinden. Die Federkörper 9, 10 werden durch Spritzgießen in dem Zwischenraum zwischen den Wänden 5, 6, 7, 8 angeordnet und sind haftend mit den Wänden 7, 8 verbunden. Die Wände 5, 6 des Auflagers 2 und die Wände 7, 8 des Traglagers 3 sind derart relativ zueinander geneigt in dem die Wände 7, 8 des Traglagers 3 geneigt sind. Dabei stützt sich der Federkörper 9, 10 gleichzeitig über die Flächen 21, 22 gegen den Fahrzeugrahmen, an dem das Lager montiert ist, ab. Es ergibt sich in der Draufsicht ein trapezförmiger Querschnitt des Traglagers 3. Die Wände 5, 6 des Auflagers 2 sind dagegen zueinander parallel ausgerichtet. Dadurch ergibt sich in Richtung der schmaleren Stirnseite des Traglagers 3 eine höhere Steifigkeit und eine einfache Montierbarkeit. Die Steifigkeit in dieser Richtung wird auch als Quersteifigkeit bezeichnet.

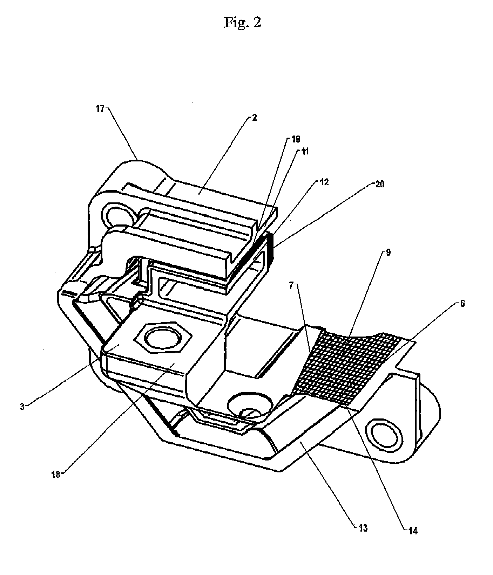

Figur 2 zeigt das in Figur 1 beschriebene Lager 1 in perspektivischer Darstellung. Bei dem erfindungsgemäßen Lager ist die Durchbrechung 4 im Wesentlichen dreiecksförmig ausgebildet. Dabei sind an zwei Paaren einander gegenüberliegender Wände 5, 6, 7, 8 Federkörper 9, 10 angeordnet sind. Diese Federkörper 9, 10 sind nach betriebsfertiger Montage gegenüber der Horizontalen geneigt, wodurch sich eine hohe Steifigkeit in Hochrichtung ergibt. Der weiteren Wand 11 des Auflagers 2, die nach betriebsfertiger Montage horizontal ausgerichtet ist, ist ein Anschlagelement 12 zugeordnet, welches mit dem Traglager 3 verbunden ist. Das Anschlagelement 12 besteht aus einer quaderförmigen Erhebung, die einstückig mit dem Traglager 3 ausgebildet ist. Das Anschlagelement 12 weist weiterhin eine Schicht aus elastomerem Material auf. Das Anschlagelement 12 weist Anschlagflächen 19, 20 auf, wobei eine erste Anschlagfläche 19 den Federweg des Traglagers 3 in Hochrichtung begrenzt und eine zweite Anschlagfläche 20 den Federweg des Traglagers 3 in Querrichtung begrenzt. Das Auflager 2 weist auf einer ersten Stirnseite 13 einen in Richtung der Durchbrechung 4 ragenden Bund 14 auf. Der Bund 14 erstreckt sich über die Länge der Federkörper 9, 10. Das Auflager 2 und das Traglager 3 sind jeweils einstückig ausgebildet, wobei das Traglager 3 zur Gewichtsersparnis hohl ausgebildet ist. Das Auflager 2 und das Traglager 3 weisen jeweils einen Befestigungsflansch 17, 18 auf, die senkrecht zueinander angeordnet sind. In anderen Ausgestaltungen können die Befestigungsflansche 17, 18 auch parallel oder geneigt zueinander angeordnet sein.

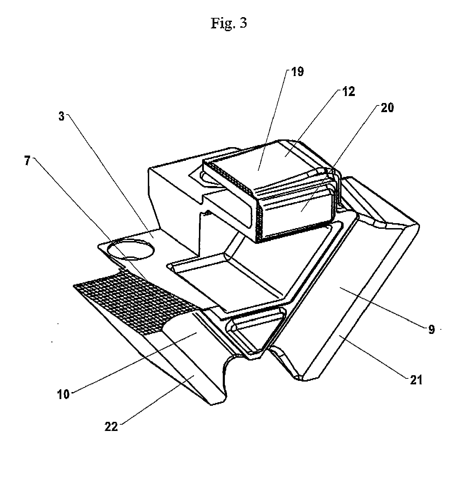

Figur 3 zeigt im Detail das Traglager 3 mit den angespritzten Federkörpern 9, 10 gemäß Figur 1 oder 2. Die Federkörper 9, 10 und die Elastomerschicht des Anschlagelements 12 sind aus einem elastomeren Werkstoff und werden in einem Arbeitsgang an das Traglager 3 angespritzt. Dadurch ist das Traglager 3 umfänglich mit dem Werkstoff der Federkörper 9, 10 umgeben und die Federkörper 9, 10 und das Anschlagelement 12 sind daher materialeinheitlich und einstückig ausgebildet.

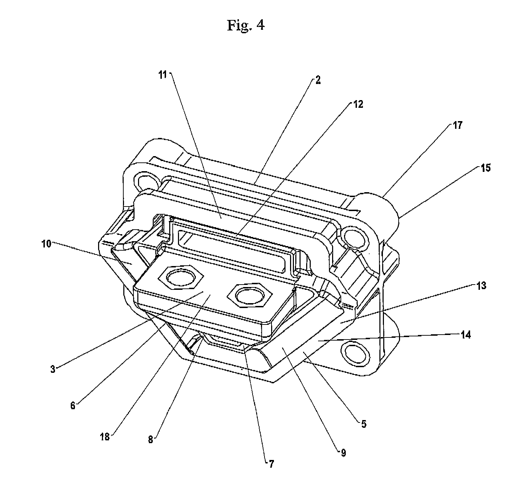

Figur 4 zeigt das Lager 1 gemäß einer der vorstehenden Figuren in bestimmungsgemäßer Einbaulage. Das Auflager 2 des Lagers 1 wird durch Schraubverbindungen, die an dem zu dem Auflager 2 gehörigen Befestigungsflansch 17 angeordnet sind, an einem angrenzenden Bauteil 16 befestigt. Das angrenzende Bauteil 16 ist in der erfindungsgemäßen Ausführung der Fahrzeugrahmen eines Nutzfahrzeugs. Dadurch liegt die zweite Stirnseite 15 an dem angrenzenden Bauteil 16 an und das angrenzende Bauteil 16 stützt die Federkörper 9, 10 verliersicher in dem Lager 1.

## Patentansprüche

1. Lager (1), umfassend ein Auflager (2) und ein Traglager (3), wobei das Auflager (2) eine Durchbrechung (4) aufweist in der das Traglager (3) angeordnet ist, wobei das Auflager (2) und das Traglager (3) einander zugewandte Wände (5, 6, 7, 8) aufweisen und wobei das Auflager (2) und das Traglager (3) durch Federkörper (9, 10) miteinander verbunden sind, die an zumindest einem Teil der Wände (5, 6, 7, 8) angeordnet sind, **dadurch gekennzeichnet, dass** die Wände (5, 6) des Auflagers (2) und die Wände (7, 8) des Traglagers (3) relativ zueinander geneigt sind.

2. Lager nach Anspruch 1, **dadurch gekennzeichnet, dass** die Wände (7, 8) des Traglagers (3) geneigt sind.

3. Lager nach Anspruch 1 oder 2, **dadurch gekennzeichnet, dass** die Durchbrechung (4) im Wesentlichen dreiecksförmig ist.

4. Lager nach einem der Ansprüche 1 bis 3, **dadurch gekennzeichnet, dass** an zwei Paaren einander gegenüberliegender Wände (5, 6, 7, 8) Federkörper (9, 10) angeordnet sind.

5. Lager nach Anspruch 4, **dadurch gekennzeichnet, dass** einer weiteren Wand (11) des Auflagers (2) ein Anschlagelement (12) zugeordnet ist, welches mit dem Traglager (3) verbunden ist.

6. Lager nach einem der Ansprüche 1 bis 5, **dadurch gekennzeichnet, dass** das Auflager (2) auf einer ersten Stirnseite (13) zumindest teilweise einen in Richtung der Durchbrechung (4) ragenden Bund (14) aufweist.

7. Lager nach einem der Ansprüche 1 bis 6, **dadurch gekennzeichnet, dass** die Federkörper (9, 10) auf der zweiten Stirnseite (15) durch ein an das Lager (1) angrenzendes Bauteil (16) gestützt sind.

8. Lager nach einem der Ansprüche 1 bis 7, **dadurch gekennzeichnet, dass** das Auflager (2) und das Traglager (3) jeweils einen Befestigungsflansch (17, 18) aufweisen, die senkrecht zueinander angeordnet sind.

9. Lager nach einem der Ansprüche 1 bis 8, **dadurch gekennzeichnet, dass** das Auflager (2) und das Traglager (3) jeweils einstückig ausgebildet sind.

10. Lager nach einem der Ansprüche 1 bis 9, **dadurch gekennzeichnet, dass** das Traglager (3) umfänglich mit dem Werkstoff der Federkörper (9, 10) umgeben ist.

11. Lager nach einem der Ansprüche 1 bis 10, **dadurch gekennzeichnet, dass** das Anschlagelement (13) und die Federkörper (9, 10) materialeinheitlich und einstückig ausgebildet sind.

12. Verwendung des Lagers (1) nach einem der vorherigen Ansprüche zur Lagerung eines Nutzfahrzeugs.
